# EUROPEAN PATENT APPLICATION

(11) **EP 0 582 479 A1**
(43) Date of publication of application: **09.02.1994**
(21) Application number: 93306206.9
(22) Date of filing: 05.08.1993
(51) Int. Cl.: F24F 3/06, B61D 27/00, B60H 1/00

(54) **Temperature control system**

(30) Priority: 05.08.1992 GB 9216610
(71) Applicant: TEMPERATURE LIMITED, Segensworth West, Fareham, Hampshire (GB)
(72) Inventor: Seward, Terence Robert, Shanklin, Isle of Wight (GB)
(74) Representative: Powell, Stephen David

(57) **Abstract**

A temperature control system comprises a primary loop (11) connected to second loops (12-14) via respective refrigerant modules (40) acting as reversible heat exchangers. The secondary loops contain temperature control units (35) in the form of a coil heat exchanger and an associated fan. The refrigerant modules may incorporate gauged valve arrangements (105-108) to reverse the pipe connections when heating demands change.

## Description

The present invention relates to a temperature control system and more particularly to a system for heating and/or cooling buildings, whether in domestic applications or in commercial applications such as offices, or vehicles, especially railway carriages.

Existing systems comprise a heat source and/or sink at one part of a building and one or more terminal units distributed at other parts of the building. In a first type of system a refrigerant circuit is incorporated within each terminal unit; although efficient in energy terms, this arrangement can cause a noise disturbance to occupants of the building. In a second type of system a refrigerant circuit constitutes a part of the heat source and/or sink; although relatively quiet in operation, this arrangement is not as efficient in energy terms and requires two distribution loops in parallel, one for heating and one for cooling.

The present invention seeks to overcome or at least reduce the disadvantages of the above-described systems.

According to the present invention, there is provided a temperature control system comprising a primary loop system containing heat transfer fluid and comprising means for inserting heat into and/or removing heat from said loop system, characterised in that the control system further comprises, one or more secondary loop systems containing heat transfer fluid and each comprising one or more temperature control units, each secondary loop system being associated with a respective refrigerant circuit module acting as a reversible heat exchanger between the secondary loop system and a respective part of the primary loop system.

An advantage of such a system is the use of a minimal amount of refrigerant. This has environmental advantages and the danger of leaks is minimised by the absence of long pipe runs carrying refrigerant.

In one preferred system the or each refrigerant circuit module comprises a refrigerant circuit having a compressor and first and second heat exchangers, the refrigerant circuit being connected to a valved pipe system having a first inlet and an associated first outlet and a second inlet and an associated second outlet the pipe system comprising a plurality of ganged three-port valve arrangements having two switched positions in a first of which cooled fluid is passed from the first heat exchanger via a first valved arrangement to the first outlet and returning warmed fluid from the first inlet passes through a second valved arrangement back to the first heat exchanger, and hot fluid from the second heat exchanger flows via a third valved arrangement to the second outlet and returning cooled fluid from the second inlet passes via a fourth valved arrangement back to the second heat exchanger, and in the second of which switched positions warm fluid from the second heat exchanger passes via the third valved arrangement to the first outlet and returning cooled fluid from the first inlet passes via the fourth valved arrangement back to the second heat exchanger and cooled fluid from the first heat exchanger flows via the first valved arrangement to the second outlet and returning heated fluid passes from second inlet passes via the second valved arrangement back to the first heat exchanger.

This provides a very flexible but simple arrangement for switching the system when a change in heating demand occurs.

The primary loop system may comprise first and second pipes leading to and from said heat inserting and/or removing means and a plurality of pipe limbs short circuiting said first and second pipes, each refrigerant circuit being in thermal communication with a said pipe limb.

This provides an effective arrangement for the transfer of heat through the system.

The heat transfer fluid in the primary and secondary loop systems is preferably water.

Preferred embodiments of the present invention will now be described, by way of example only, with reference to the accompanying drawings of which:
Fig.1 shows a heating and air conditioning system for a building with a plurality of distributed terminal units;
Fig.2 shows a modified refrigerant circuit module and its associated connections; and
Fig.3 shows a modified three-port valve arrangement for use in a module as shown in Fig.2.

Referring to the drawing, a heating and air conditioning system 10 comprises a primary water system 11 and a plurality of secondary water systems 12,13,14. The primary water system comprises a heat rejection unit 21, e.g a dry cooler or chiller, and a heat injection unit 22, e.g a boiler, only one of which is in operation at any one time dependent upon current operating requirements. The heat source 22 may also be constituted by a dry cooler or the like, preferably with a supplementary heat source. A primary water pump 23 pumps water along pipe 24 and back along pipe 25, which together comprise the primary water loop. At spaced intervals along the loop, the pipes 24,25 are short-circuited by limbs 26.

Each limb 26 passes through a respective refrigerant circuit module 40. Each module 40 comprises a refrigerant circuit 41 with coils 42,43. Coil 42 is in thermal contact with the respective limb 26 of the primary water system 11. Coil 43 is in thermal contact with a pipe 31 of a respective secondary water loop 31,32 of a secondary system 12,13 or 14. The refrigerant circuit module 40 acts as a reversible heat exchanger in that by actuating a reversible valve the functions of coils 42 and 43 may be interchanged between evaporator and condenser. Thus coil 42 may absorb heat from limb 26 and coil 43 may provide heat to pipe 31 or vice versa.

Each secondary water system comprises a secondary water pump 33 to pump water along pipes 31,32 to one or more terminal units 35 each in the form of a coil heat exchanger and an associated fan.

In operation, the units 35 of an individual secondary loop are all providing warmth to the adjacent room space or cooling the same (i.e providing it with coolth). However, it is possible for the units 35 of one secondary system, 12 say, to be giving off heat and for the units of another system, 13 say, to be providing a cooling effect. Depending upon the required effect, the reversing valve of the respective refrigerant circuit module 40 is set to give the required functioning. Taking into account the heat requirements of all the modules 40, unit 21 or 22 is switched on as required to keep the primary water loop within a controlled temperature range.

The above-described system has numerous advantages. In particular it is quiet, since the refrigerant circuit modules 40, which are sources of noise, can be located in non-critical areas, i.e away from the occupants of the building. In addition if it is desired to replace a module 40, e.g upon failure of the module or if it is required to upgrade the system in terms of size or the nature of the refrigerant, this is a relatively simple task.

The fan coil units 35 may be relatively small and thus may operate more quietly than in conventional systems; in addition they may be dispersed around the room space to give a better temperature distribution.

The system is flexible and may be zoned, as shown, in that a single refrigerant circuit 40 may serve one or an appropriate plurality of fan coil units 35. As mentioned above, different zones may be heated and cooled simultaneously. Simple small bore piping may be used for the secondary water loops 31,32. Although primary and secondary systems are provided the overall arrangement is a two pipe system capable of both heating and cooling. The whole system is very energy efficient.

Major advantages of the above-described system are the use of a minimal amount of refrigerant, and the restriction of the refrigerant to compact, localised modules hence reducing the likelihood of leaks and also reducing the inconvenience of any leaks which might occur. The only pipes running through the building contain water, any leaks of which can be easily located and repaired. Moreover the refrigerant circuit modules can be incorporated into existing systems allowing most of the heat exchangers and connecting pipework to continue to be used.

Various modifications can be made to the above described arrangement. For example, one or more of the refrigerant circuits 41 may extend to the respective terminal units 35, in which case the corresponding secondary water loop is dispensed with.

One or more of the terminal units 35 may be limited to heating only or cooling only if the other function is not required.

Although, for reasons of convenience, water has been disclosed in the heat transfer medium of the primary and secondary loops, any relatively cheap and noncorrosive fluid can be used instead. The system can be installed in vehicles, particularly in Railway carriages.

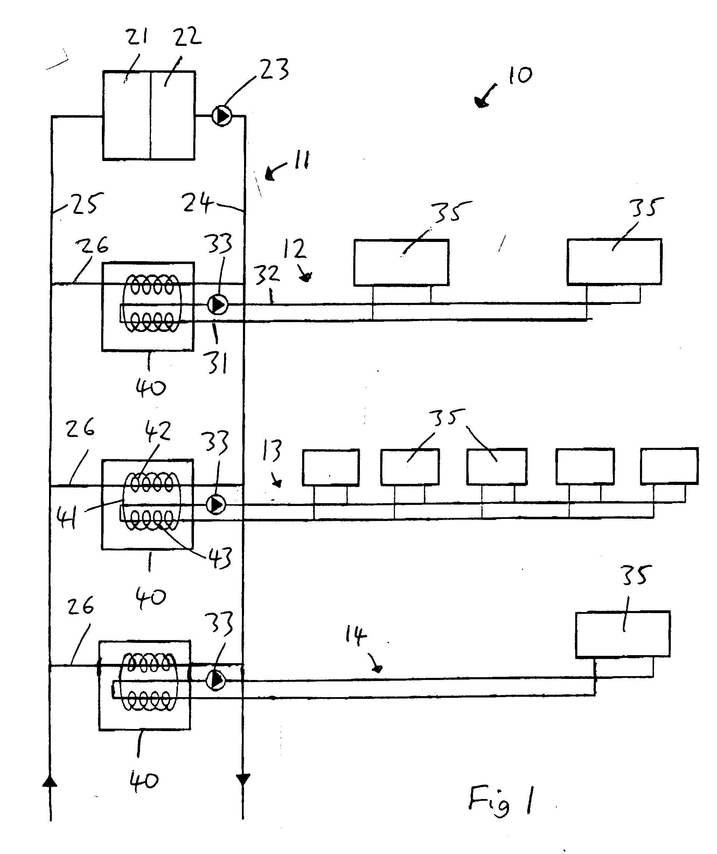

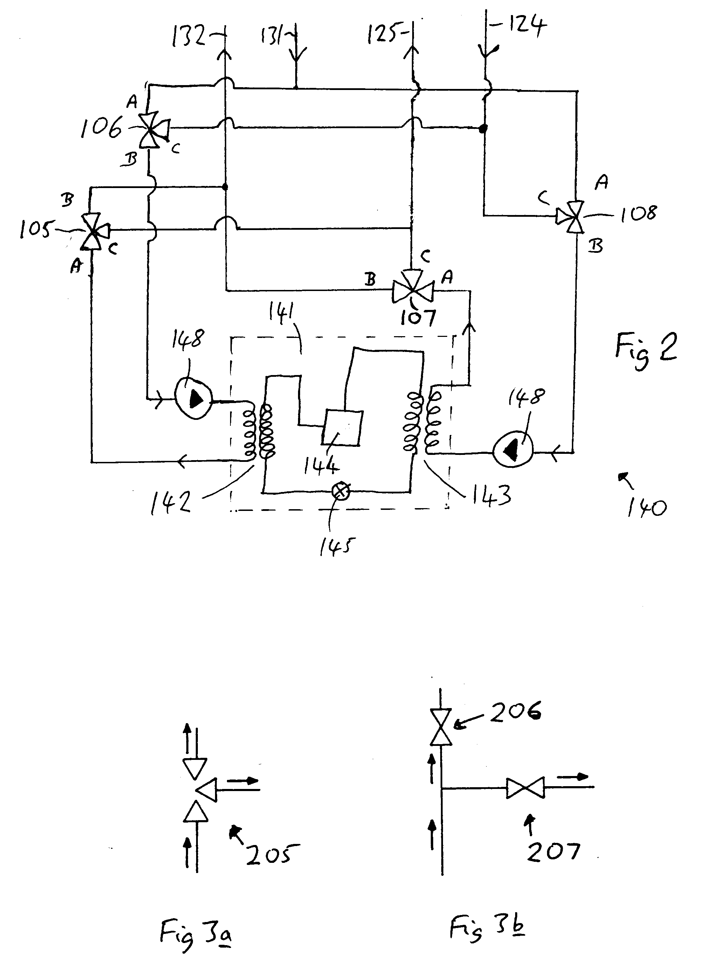

Fig.2 shows a modified refrigerant circuit module 140 and its associated connections. The module comprises a refrigerant circuit 141 comprising a compressor 144, an expansion device 145, a refrigerant-to-fluid evaporator heat exchanger 142 and a refrigerant-to-fluid condenser heat exchanger 143. The pipes 131,132 forming the fluid circuit to the terminal units 35 and the pipes 124,125 forming the fluid circuit to the heat source/sink 21,22 are connected to the refrigerant circuit 141 by a plurality of valves 105-108 each having three ports A,B and C. Fluid circulating pumps 148 are provided at the inlets of the heat exchangers. Thus when modules 140 replace one or more of the modules 40, pipe 124 joins with pipe 24 etc and pumps 33 are replaced by pumps 148.

The valves 105-108 are interconnected to operate as follows.

If the terminal units require chilled water, chilled water is supplied from heat exchanger 142 via ports 105A, 105B to pipe 132, and returning warmed water from the terminal units passes from pipe 131 through valve ports 106A, 106B to heat exchanger 142. Hot water from the heat exchanger 143 flows via ports 107A, 107C to pipe 125 to the heat sink, and the returning cooled water passes from pipe 124 via ports 108C, 108B to heat exchanger 143.

If the terminal units require warm water, the valves are switched so that water from heat exchanger 143 passes via ports 107A, 107B to pipe 132. Cooled returning water from the terminal units passes from pipe 131 via ports 108A, 108B back to heat exchanger 143. Simultaneously chilled water from heat exchanger 142 flows via ports 105A, 105C to pipe 125 and the heat source, and returning heated water passes from pipe 124 via ports 106C, 106B to heat exchanger 142.

The three-port valves 105-108 are ganged as appropriate.

Some or all of the three-port valves 105-108 may be replaced by two two-port valves as shown in Fig.3. The functioning of the three-port valve 205 shown in Fig.3a is duplicated by the two two-port valves 206,207 of Fig.3b, i.e. they each constitute a three-port arrangement.

## Claims

1. A temperature control system (10) comprising a primary loop system (11) containing heat transfer fluid and comprising means (21,22) for inserting heat into and/or removing heat from said loop system, characterised in that the control system further comprises one or more secondary loop systems (12,13,14) containing heat transfer fluid and each comprising one or more temperature control units (35), each secondary loop system being associated with a respective refrigerant circuit module (40,140) acting as a reversible heat exchanger between the secondary loop system and a respective part (26;124,125) of the primary loop system.

2. A temperature control system according to claim 1, wherein the or each refrigerant circuit module (140) comprises a refrigerant circuit (141) having a compressor (146) and first (142) and second (143) heat exchangers, the refrigerant circuit being connected to a valved pipe system having a first inlet (131) and an associated first outlet (132) and a second inlet (124) and an associated second outlet (125) the pipe system comprising a plurality of ganged three-port valve arrangements (105-108) having two switched positions in a first of which cooled fluid is passed from the first heat exchanger via a first valved arrangement (105) to the first outlet and returning warmed fluid from the first inlet passes through a second valved arrangement to (106) back to the first heat exchanger, and hot fluid from the second heat exchanger (143) flows via a third valved arrangement (107) to the second outlet and returning cooled fluid from the second inlet passes via a fourth valved arrangement (108) back to the second heat exchanger, and in the second of which switched positions warm fluid from the second heat exchanger passes via the third valved arrangement (107) to the first outlet and returning cooled fluid from the first inlet passes via the fourth valved arrangement (108) back to the second heat exchanger and cooled fluid from the first heat exchanger flows via the first valved arrangement (105) to the second outlet and returning heated fluid passes from second inlet passes via the second valved arrangement (106) back to the first heat exchanger.

3. A temperature control system as claimed in claim 1 or 2 wherein the primary loop system (11) comprises first and second pipes (124,125) leading to and from said heat inserting and/or removing means (21,22) and a plurality of pipe limbs (26) short circuiting said first and second pipes, each refrigerant circuit (40) being in thermal communication with a said pipe limb.

4. A temperature control system according to any preceding claim wherein the terminal units (35) each comprise a coil heat exchanger and an associated fan.

5. A refrigerant circuit module (140) comprising a refrigerant circuit (141) having a compressor (144) and first (142) and second (143) heat exchangers, the module being characterised in that the refrigerant circuit is connected to a valved pipe system having a first inlet (131) and an associated first outlet (132) and a second inlet (124) and an associated second outlet (125) the pipe system comprising a plurality of ganged three-port valve arrangements (105-108) having two switched positions in a first of which cooled fluid is passed from the first heat exchanger via a first valved arrangement (105) to the first outlet and returning warmed fluid from the first inlet passes through a second valved arrangement to (106) back to the first heat exchanger, and hot fluid from the second heat exchanger (143) flows via a third valved arrangement (107) to the second outlet and returning cooled fluid from the second inlet passes via a fourth valved arrangement (108) back to the second heat exchanger, and in the second of which switched positions warm fluid from the second heat exchanger passes via the third valved arrangement (107) to the first outlet and returning cooled fluid from the first inlet passes via the fourth valved arrangement (108) back to the second heat exchanger and cooled fluid from the first heat exchanger flows via the first valved arrangement (105) to the second outlet and returning heated fluid passes from second inlet passes via the second valved arrangement (106) back to the first heat exchanger.
